# EUROPEAN PATENT APPLICATION

(11) **EP 2 977 585 A1**
(43) Date of publication of application: **27.01.2016**
(21) Application number: 15177917.0
(22) Date of filing: 22.07.2015
(51) Int. Cl.: F02B 21/00

(54) **COMPRESSED AIR SUPPLY METHOD**

(30) Priority: 23.07.2014 US 201414339373
(71) Applicant: Paccar Inc, Bellevue, WA 98004 (US)
(72) Inventor: GROVER, Benjamin T., Maple Valley, WA Washington 98038 (US); MURIAS, Adrian, Mercer Island, WA Washington 98040 (US)
(74) Representative: Gevers Patents

(57) **Abstract**

A compressed air supply system includes an engine (50). The engine has at least one combustion chamber defined by a cylinder (54), a piston (52) operable to reciprocate within the cylinder, and an injector operable to inject fuel into the cylinder. The engine further includes at least one intake valve (62), at least one exhaust valve (66), and at least one compressed air valve (82), all associated with the cylinder. The engine has a combustion cycle for producing power, wherein the combustion cycle includes a compression stroke, a power stroke, an exhaust stroke, and an intake stroke. The engine also has an air compression cycle for producing compressed air. The air compression cycle includes an air compression intake stroke and an air compression stroke. At least one control component is in communication with the engine and is configured to selectively control the engine to alternate between the combustion cycle and the air compression cycle.

## Description

### BACKGROUND

Heavy duty trucks and other commercial vehicles utilize air brakes, air suspensions, and other auxiliary air systems. To power these systems, a supply of compressed air is stored in a compressed air supply tank. As the air systems are used, the supply of compressed air in the tank is depleted and must be replenished. One typical solution for replacing compressed air in the tank is to have a compressor mounted to the engine of the vehicle. When it is determined that additional compressed air is to be supplied to the tank, the engine drives the compressor to produce pressurized air. Typically, the pressurized air is passed through an air dryer to filter, cool, and dry the air prior to being delivered to the supply tank, where it is stored until needed.

Present compressed air supply configurations require additional hardware, which increases production costs, as well as operating costs due to additional weight. The additional hardware also adds to operating costs because it represents additional components that need to be serviced and potentially require replacement. In addition to the extra hardware, additional processors and sensors are required to control the operation of the added hardware.

### SUMMARY

An exemplary embodiment of compressed air supply system includes an engine. The engine has at least one combustion chamber defined by a cylinder, a piston operable to reciprocate within the piston, and an injector operable to inject fuel into the cylinder. The engine further includes at least one intake valve, at least one exhaust valve, and at least one compressed air valve, all associated with the cylinder. The engine has a combustion cycle for producing power, wherein the combustion cycle includes a compression stroke, a power stroke, an exhaust stroke, and an intake stroke. The engine also has an air compression cycle for producing compressed air. The air compression cycle includes an air compression intake stroke and an air compression stroke. At least one control component is in communication with the engine and is configured to selectively control the engine to alternate between the combustion cycle and the air compression cycle.

An exemplary embodiment of a method for providing compressed air from an engine is also disclosed. The engine has at least one combustion chamber defined by a cylinder, a piston operable to reciprocate within the piston, and an injector operable to inject fuel into the cylinder. The engine also includes at least one intake valve, at least one exhaust valve, and at least one compressed air valve associated with the cylinder. The engine has a combustion cycle for producing power, wherein the combustion cycle comprises a compression stroke, a power stroke, an exhaust stroke, and an intake stroke. The engine also has an air compression cycle for producing compressed air, the air compression cycle comprising an air compression intake stroke and an air compression stroke. The method includes the step of preventing a fuel injector from injecting fuel into the combustion chamber during the air compression cycle. The method further includes the steps of compressing air in the cylinder during the air compression cycle and discharging compressed air through the air compression valve.

A second exemplary embodiment of a method for providing compressed air from an engine is disclosed. The engine has at least one combustion chamber defined by a cylinder, a piston operable to reciprocate within the piston, and an injector operable to inject fuel into the cylinder. The engine also includes at least one intake valve, at least one exhaust valve, and at least one compressed air valve associated with the cylinder. The engine has a combustion cycle for producing power, wherein the combustion cycle comprises a compression stroke, a power stroke, an exhaust stroke, and an intake stroke. The engine also has an air compression cycle for producing compressed air, wherein the air compression cycle comprises an air compression intake stroke and an air compression stroke. The method includes the step of preventing a fuel injector from injecting fuel into the combustion chamber during the air compression cycle. The method further includes the step of receiving air into the cylinder during the air compression cycle. The method also includes the steps of compressing the air in the cylinder during the air compression cycle and discharging the compressed air from the cylinder during the air compression cycle.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 shows a schematic view of a known diesel engine at the beginning of a compression stroke;
FIGURE 2 shows a schematic view of the diesel engine of FIGURE 1 at the beginning of a power stroke;
FIGURE 3 shows a schematic view of the diesel engine of FIGURE 1 at the beginning of an exhaust stroke;
FIGURE 4 shows a schematic view of the diesel engine of FIGURE 1 at the beginning of an intake stroke;
FIGURE 5 shows a schematic view of an embodiment of diesel engine according to the present disclosure, with the diesel engine at the beginning of an air compression stroke;
FIGURE 6 shows a schematic view of the diesel engine of FIGURE 5 at the end of the air compression stroke;
FIGURE 7 shows a schematic view of the diesel engine of FIGURE 5 at the beginning of an air compression intake stroke;
FIGURE 8 shows a schematic view of the diesel engine of FIGURE 5 connected to an air supply tank; and
FIGURE 9 shows a flow diagram of one example of a compressed air supply method.

### DETAILED DESCRIPTION

The detailed description set forth below in connection with the appended drawings where like numerals reference like elements is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein.

Prior to discussing the details of various aspects of the present disclosure, it should be understood that the following description includes sections that are presented largely in terms of logic and operations that may be performed by conventional electronic components. These electronic components may be grouped in a single location or distributed over a wide area, and can generally include processors, memory, storage devices, input/output circuitry, etc. It will be appreciated by one skilled in the art that the logic described herein may be implemented in a variety of configurations, including but not limited to, hardware, software, and combinations thereof. In circumstances were the components are distributed, the components are accessible to each other via communication links.

Generally described, the present disclosure is directed to a system and method for providing compressed air using a modified internal combustion engine. Instead of using additional hardware and compressors, embodiments of the present disclosure utilize one or more cylinders of the modified internal combustion engine to compress air that is then supplied to a compressed air storage tank. While the disclosed engine is a diesel engine, it should appreciated that the present disclosure is not limited to diesel engines and can be used in conjunction with other internal combustion engines.

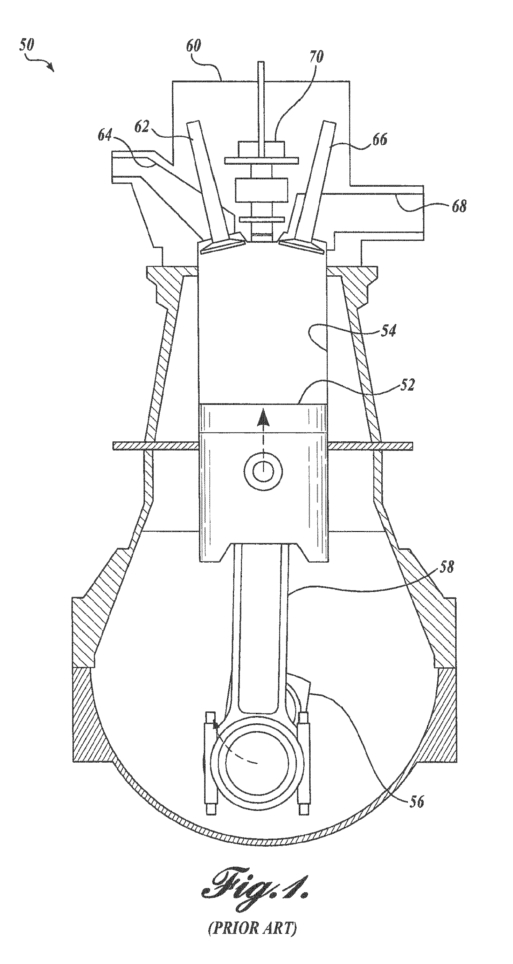

FIGURES 1-4 show schematic views of a known diesel engine 50 as it moves through a four-stroke combustion cycle. The engine 50 includes a piston 52 slidably disposed within a cylinder 54. The piston 52 is coupled to a crankshaft 56 by a connecting rod 58 so that rotation of the crankshaft 56 reciprocates the piston along the length of the cylinder 54. Movement of the piston 52 within the cylinder 54 changes the volume in the cylinder between the piston 52 and the cylinder head 60. An inlet valve 62 selectively allows gases to enter the cylinder 54 through an inlet channel 64, and an exhaust valve 66 selectively allows gases to exit the cylinder through an exhaust channel 68.

FIGURE 1 shows the engine 50 at the beginning of a compression stroke. The piston 52 is at or near bottom dead center (BDC), and the inlet valve 62 and exhaust valve 64 are both closed. As the crankshaft 56 rotates in the indicated direction, the piston 52 is driven up through the cylinder 54, compressing the gas in the cylinder. Compressing the gas increases both the temperature and the pressure of the gas within the cylinder 54.

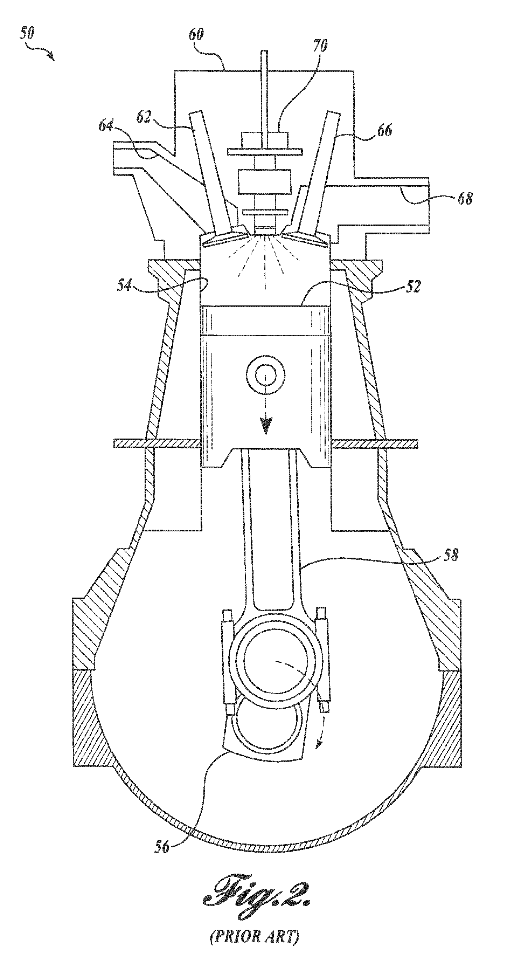

FIGURE 2 show engine 50 at the beginning of a power stroke. The piston 52 is just past top dead center (TDC), and the cylinder 54 is filled with hot compressed air. The power stroke begins when an injector 70 injects fuel into the cylinder 54. The heat of the compressed air in the cylinder 54 ignites the fuel, causing the gases in the cylinder 54 to rapidly expand. The rapid expansion of the gases drives the piston 52 downward, which rotates the crankshaft 56.

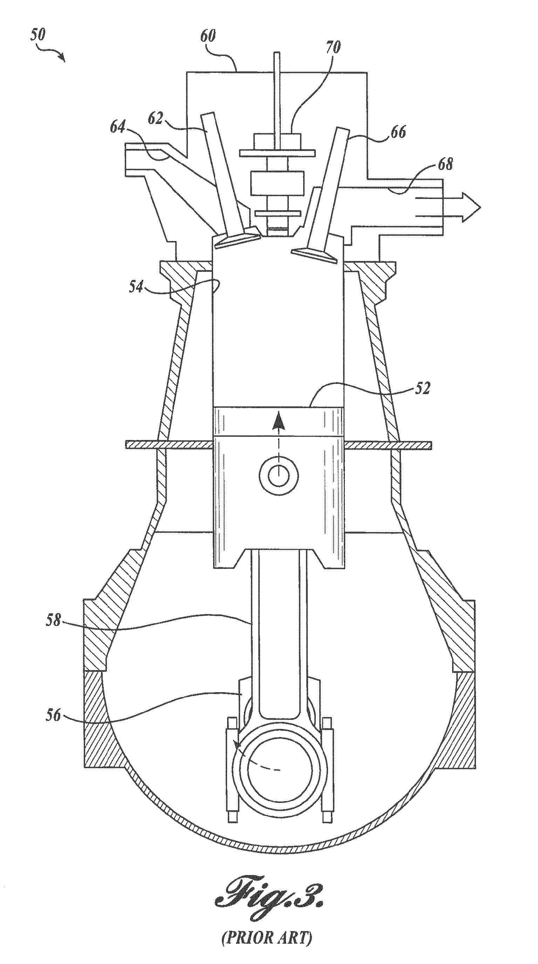

FIGURE 3 shows the engine 50 at the beginning of the exhaust stroke. The piston 52 is at or near BDC, and the exhaust valve 64 opens. Continued rotation of the crankshaft 56 moves the piston 52 up in the cylinder 54, driving the gases in the cylinder out thorough the exhaust channel 68.

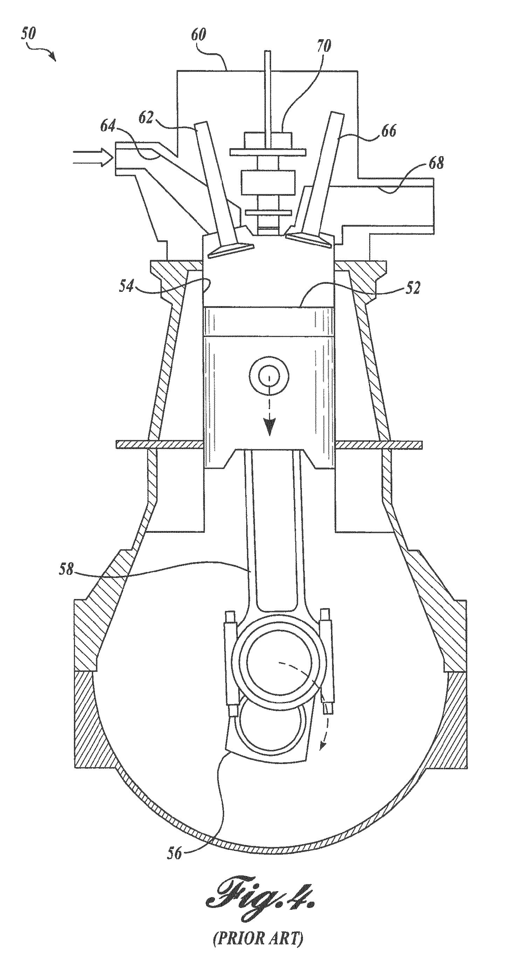

FIGURE 4 shows the engine 50 at the beginning of the intake stroke. The piston 52 is at or neart TDC, the exhaust valve 66 is closed, and the inlet valve 62 is opened. Rotation of the crankshaft 56 drives the piston 52 downward in the cylinder 54, drawing air in through the inlet channel 64. The piston continues downward until it reaches BDC, at which point the inlet valve 62 closes and the engine 50 begins the combustion cycle again.

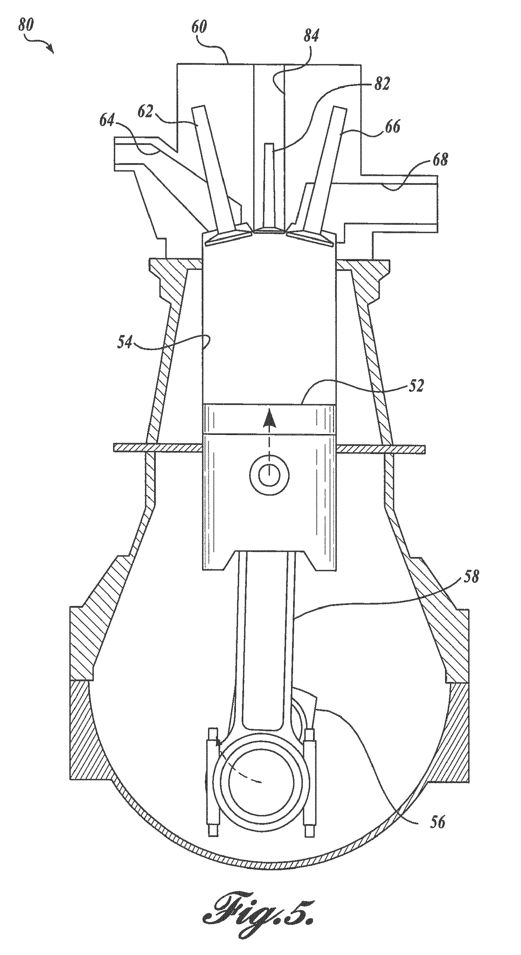

Referring now to FIGURES 5-7, a modified diesel engine 80 is shown. The engine 80 is similar to the previously described engine 50 except that the cylinder head has been modified to add a compressed air valve 82 that opens and closes to selectively allow compressed air from the cylinder 54 to flow through a compressed air channel 84 to a storage tank. For clarity, the injector 70 is not shown.

FIGURE 5 shows the engine at the beginning of the air compression stroke. The piston 52 is at or near BDC, with the inlet valve 62, the exhaust valve 66, and the compressed air valve 82 all closed. As a result, air neither enters nor leaves the cylinder 54. At least one of the engine cylinders still operating in the four-stroke diesel combustion cycle rotate the crankshaft 56, which moves the piston 52 upward in the cylinder 54 to compress the air in the cylinder 52.

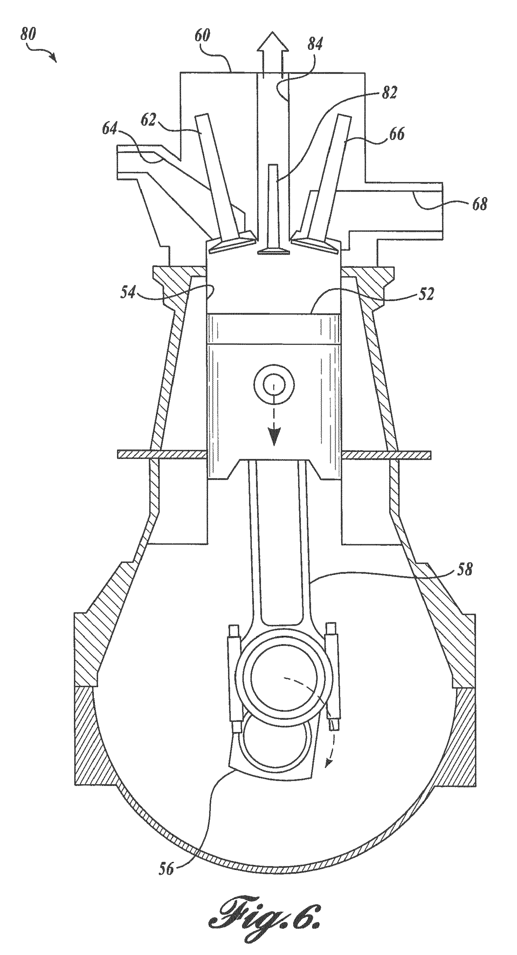

As the piston 52 approaches the TDC position of FIGURE 6, the compressed air valve 82 briefly opens, allowing the compressed air from the cylinder 54 to be discharged through the compressed air channel 84 to the storage tank, where it is stored until needed.

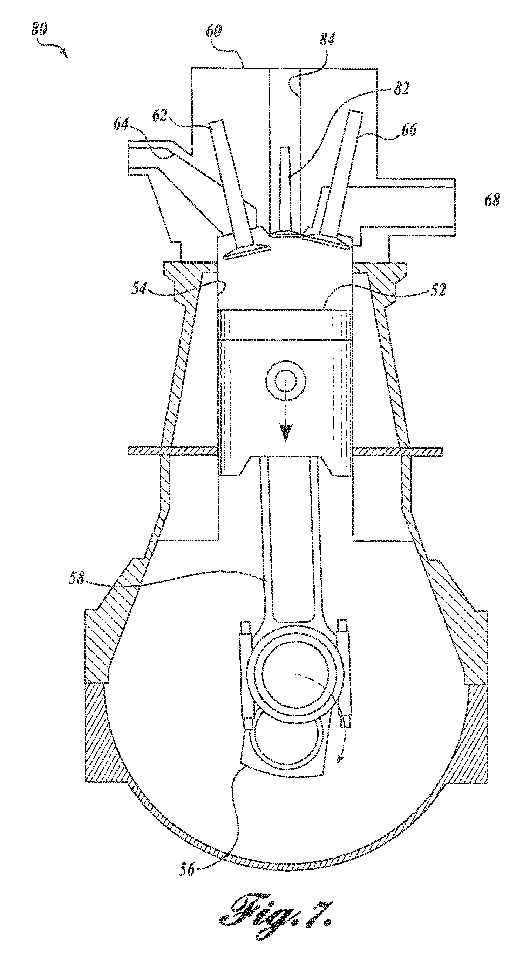

As shown in FIGURE 7, as the piston 52 passes through the TDC position, the compressed air valve 82 closes, and the inlet valve 62 opens. With the inlet valve 62 open, the piston 52 is driven downward in the cylinder 54 by the crankshaft 56, which is still turning. Movement of the piston 52 downward in the cylinder 54 draws air into the cylinder through the open inlet valve 62. When the piston 52 reaches BDC, the inlet valve 62 closes, and the piston has completed an air compression cycle and returned to the position shown in FIGURE 5.

The diesel combustion cycle shown in FIGURES 1-4 and the two-stroke air compression cycle shown in FIGURES 5-7 are described with reference to certain events, (such as opening or closing valves) occurring when the piston is at or near TDC or BDC. It should be appreciated that the timing at which the valves are opened and closed is not limited to a precise piston location, and variations to the disclosed embodiment are possible and should be considered within the scope of the present disclosure.

Using the engine 80 in a non-fueled state as described to operate as an air pump provides several advantages over known configurations in which a separate air compressor is coupled to the engine. One advantage is a reduction in part count, which makes the truck less expensive to build, lighter, easier to maintain, and less susceptible to component failures. In addition, the engine already communicates with various on-board controllers, such as an Engine Control Module (ECM), a cab controller, and various engine sensors. The presence of the existing controllers and sensors reduces or eliminates the need for additional processors and sensors to control the additional components that would otherwise be utilized. Further, the relatively large displacement of engine cylinders compared to commercially available air compressors reduces the time required to recharge the compressed air supply tanks.

The use of electronic fuel injection on modern engines allows for the disclosed system to be utilized while minimizing performance inefficiencies. Specifically, the ECM or another suitable controller can be configured to selectively control the amount of fuel injected into each cylinder during a cycle. When one or more cylinders are controlled to act as air compression cylinders, the ECM can increase the fuel injected into the remaining combustion cylinders. Doing so increases the power output of each combustion cylinder so that the overall power output of the engine does not decrease, or any decrease is maintained below an acceptable level. Thus, as compared to known configurations that utilize a separate compressor, the presently disclosed configuration reduces the amount of parasitic drag caused by air compression, i.e., the amount of engine power lost to compress air. Operating the cylinders to use "intelligent charging" also allows for improved fuel economy by tailoring the performance of each combustion cylinder to a given operating condition.

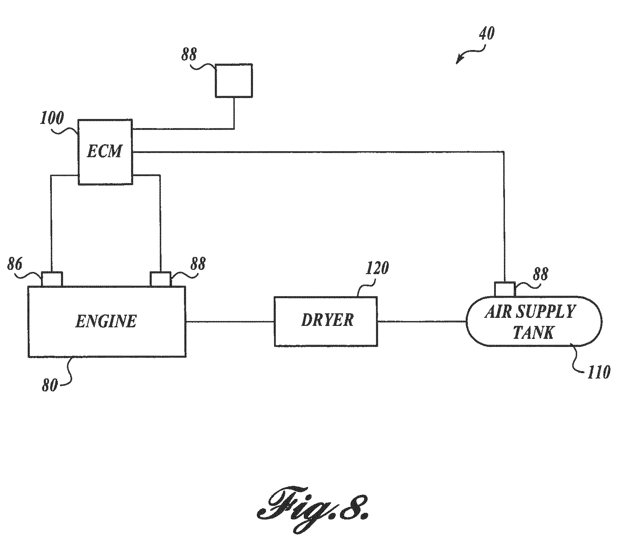

FIGURE 8 shows an exemplary embodiment of an air compression system 40 according to the present disclosure. The system 40 includes an engine 80, as previously described and illustrated in FIGURES 5-7. Sensors 86 sense engine operating conditions, including engine speed, engine load, etc., and send signals to the vehicle ECM 100. Other sensors 88, 90 sense other general vehicle operating conditions, such as air supply tank pressure, vehicle speed, braking operations, etc., and send signals to the ECM 100 regarding these conditions. In response to these signals, and in some embodiments, operator input, the ECM 100 controls the engine operation. In one example, the ECM 100 controls one or more actuators 88 to selectively change the operation of one or more of the cylinders from the diesel combustion cycle shown in FIGURES 1-4 to the two-stroke air compression cycle shown in FIGURES 5-7. It will be appreciated that the disclosed actuators can be mechanical, hydraulic, electrical, or any other suitable type, or any combination thereof.

In one exemplary embodiment, the ECM 100 determines that there is a need for compressed air based on a signal received from a pressure sensor 90 that senses pressure within the air supply tank 110. In response, the ECM 100 controls the engine 80 so that at least one cylinder stops operating in the four-stroke diesel combustion cycle shown in FIGURES 1-4 and starts operating in the two-stroke air compression cycle shown in FIGURES 5-7. During the air compression cycle the ECM 100 controls the injector 70 so that no fuel is injected into the cylinder 54. The ECM 100 also closes the exhaust valve 66 so that no air leaves the cylinder 54 through the exhaust channel 68. As a result, air is taken in to the cylinder 54 through the air inlet channel 64, compressed, and discharged to the air supply tank 110 through the compressed air channel 84. Prior to arriving at the air supply tank 110, the air has preferably passed through an air dryer 120 to filter, cool, and dry the air.

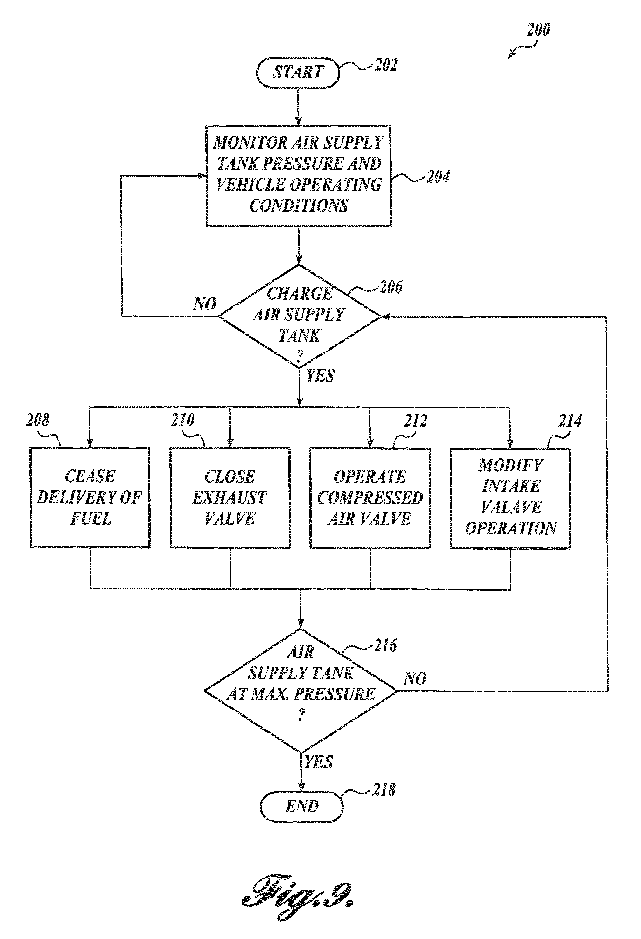

Referring now to FIGURE 9, a flow chart is shown illustrating an example of a compressed air supply method 200 carried out by the ECM 100 and engine 80. As will be appreciated by one skilled in the art, the specific steps described herein in the flowcharts may represent one or more of any number of processing strategies, such as event-driven, interrupt-driven, multi-tasking, multi-threading, and the like. As such, various steps or functions illustrated may be performed in the sequence illustrated, in parallel, or in some cases omitted. Likewise, the order of the steps is not necessarily required to achieve the features and advantages, but is proved for ease of illustration and description.

As best shown in FIGURE 9, the method 200 begins at block 202. The method proceeds to block 204 where the air supply tank 110 pressure is monitored. In one embodiment, various vehicle operating conditions, such as engine speed, engine load, brake engagement, and any other suitable operating conditions are also monitored. It will be appreciated that the monitoring of the air supply tank 110 pressure and other vehicle operating conditions can occur continuously during the method 200

Next, at decision block 206, it is determined whether to charge the air supply tank 110. In one embodiment, the ECM 100 determines to charge the air supply tank 110 if the tank pressure drops below a predetermined value. In some embodiments, the ECM 100 determines to charge the air supply tank 110 during times of energy shed, i.e., when the vehicle is going downhill or braking. In one such embodiment, the ECM 100 determines to charge the air supply tank 110 during a time of energy shed if the tank pressure is below a predetermined minimum value. In another such embodiment, the ECM 100 determines to charge the air supply tank 110 during a time of energy shed if the tank pressure is below a predetermined maximum value. In some embodiments, the ECM 100 determines not to charge the air supply tank 110 if the vehicle is traveling up a hill and the reduction in engine power would be undesirable.

If it is decided at decision block 206 not to charge the air supply tank 110, then the method proceeds back to block 204 to continue monitoring air supply tank 110 pressure and various vehicle operating conditions. However, if it is determined to charge the air supply tank 110, the method proceeds to blocks 208-214. In block 208, the ECM 100 controls the injector 70 to cease delivery of fuel to the cylinder 54. This prevents the engine from delivering a combustible mixture to the air dryer 120. At block 210, the ECM 100 closes the exhaust valve 66, which preferably stays closed throughout the charging process. At block 212, the compressed air valve 82 is actuated in accordance with the two-stroke air compression cycle shown in FIGURES 5-7. At block 214, the intake valve 62 is actuated in accordance with the two-stroke air compression cycle shown in FIGURES 5-7. As blocks 208-214 are executed, compressed air is supplied to the air supply tank 110, i.e., the tank is charging.

At decision block 216, it is determined whether the air supply tank 110 is at or above a predetermined maximum pressure. If the air supply tank 110 is at or above the predetermined maximum pressure, the method 200 proceeds to block 218 and ends. If the air supply tank is below the predetermined maximum pressure, the method 200 returns to decision block 206, where it is determined whether to continue charging the air supply tank according to the previously discussed criteria of decision block 206. One of ordinary skill in the art will appreciated that the criteria to continue charging the air supply tank 110 can be different than the criteria to start charging the air supply tank, and such variations should be considered within the scope of the present disclosure

While illustrative embodiments have been illustrated and described, it will be appreciated that various changes can be made therein without departing from the spirit and scope of the invention.

## Claims

1. A compressed air supply system, comprising:
(a) an engine having at least one combustion chamber defined by a cylinder, a piston operable to reciprocate within the piston, an injector operable to inject fuel into the cylinder, and at least one intake valve, at least one exhaust valve, and at least one compressed air valve associated with the cylinder, the engine having a combustion cycle for producing power, the combustion cycle comprising a compression stroke, a power stroke, an exhaust stroke, and an intake stroke, the engine further having an air compression cycle for producing compressed air, the air compression cycle comprising an air compression intake stroke and an air compression stroke; and
(b) at least one control component in communication with the engine, the at least one control component being configured to selectively control the engine to alternate between the combustion cycle and the air compression cycle.

2. The compressed air supply system of Claim 1, wherein the at least one control component is further configured to prevent the injector from injecting fuel into the cylinder during the air compression cycle.

3. The compressed air supply system of Claim 1, wherein the at least one control component is further configured to control the exhaust valve so that the exhaust valve is closed during at least a portion of the air compression cycle.

4. The compressed air supply system of Claim 3, wherein the at least one control component is further configured to control the intake valve so that the intake valve is closed during at least a portion of the air compression stroke.

5. The compressed air supply system of Claim 1, wherein the at least one control component is further configured to control the intake valve so that the intake valve is open during at least a portion of the air compression intake stroke.

6. The compressed air supply system of Claim 5, wherein the at least one control component is further configured to control the intake valve so that the intake valve is closed during at least a portion of the air compression stroke.

7. The compressed air supply system of Claim 1, wherein the at least one control component is further configured to selectively open the compressed air valve so that air compressed during the air compression stroke is discharged from the cylinder.

8. The compressed air supply system of Claim 7, wherein the at least one control component is further configured to control the compressed air valve so that the compressed air valve is closed during at least a portion of the air compression intake stroke.

9. The compressed air supply system of Claim 8, wherein the at least one control component is further configured to control the compressed air valve so that the compressed air valve is closed during at least a portion of the air compression stroke.

10. A method of providing compressed air from an engine, the engine having at least one combustion chamber defined by a cylinder, a piston operable to reciprocate within the piston, an injector operable to inject fuel into the cylinder, and at least one intake valve, at least one exhaust valve, and at least one compressed air valve associated with the cylinder, the engine having a combustion cycle for producing power, the combustion cycle comprising a compression stroke, a power stroke, an exhaust stroke, and an intake stroke, the engine further having an air compression cycle for producing compressed air, the air compression cycle comprising an air compression intake stroke and an air compression stroke:
(a) preventing a fuel injector from injecting fuel into the combustion chamber during the air compression cycle;
(b) compressing air in the cylinder during the air compression cycle; and
(c) discharging compressed air through the compressed air valve.

11. The method of Claim 10, further comprising the step of closing the exhaust valve during the air compression cycle.

12. The method of Claim 10, further comprising the step of controlling the intake valve to be open during at least a portion of the air compression intake stroke.

13. The method of Claim 12, further comprising the step of controlling the intake valve to be closed during at least a portion of the air compression stroke.

14. The method of Claim 10, further comprising the step of controlling the compressed air valve to be closed during at least a portion of the air compression intake stroke.

15. The method of Claim 14, further comprising the steps of controlling the compressed air valve to be closed during at least a portion of the air compression stroke and opening the compressed air valve to discharge compressed air.
